# EUROPEAN PATENT APPLICATION

(11) **EP 3 527 346 A1**
(43) Date of publication of application: **21.08.2019**
(21) Application number: 17860354.4
(22) Date of filing: 22.09.2017
(51) Int. Cl.: B29C 45/14, B29C 69/00, B29L 31/34

(54) **METAL RESIN COMPLEX AND PREPARATION METHOD AND USE OF SAME**

(30) Priority: 14.10.2016 CN 201610899065
(71) Applicant: BYD Company Limited, Shenzhen, Guangdong 518118 (CN)
(72) Inventor: WU, Yingyuan, Shenzhen Guangdong 518118 (CN); ZHANG, Guoqiang, Shenzhen Guangdong 518118 (CN); ZHAO, Guiwang, Shenzhen Guangdong 518118 (CN); SUN, Jian, Shenzhen Guangdong 518118 (CN); CHEN, Liang, Shenzhen Guangdong 518118 (CN)
(74) Representative: Gulde & Partner
(86) International application number: PCT/CN2017/102910
(87) International publication number: WO 2018/068625

(57) **Abstract**

The present disclosure provides a metal resin composite. The metal resin composite includes a metal substrate. The upper surface of the metal substrate is provided with at least one upper surface slit, the lower surface of the metal substrate is provided with at least one lower surface groove in a position opposite to the upper surface slit, and the upper surface slit is communicated with the lower surface groove. A first injection molding resin is formed in the upper surface slit by injection molding, and a second injection molding resin is formed in the lower surface groove by injection molding. The present disclosure also provides a preparation method of the metal resin composite, a personal electronic device shell including the metal resin composite, a personal electronic device, and a metal resin composite processing component.

## Description

### CROSS-REFERENCE TO RELATED APPLICATIONS

The present disclosure claims the priority of Chinese Patent Application No. 201610899065.3 filed in China on October 14, 2016. The entire content of the above-referenced application is incorporated herein by reference.

### FIELD

The present disclosure relates to the field of material science and specifically relates to a metal resin composite, a preparation method of the metal resin composite, a personal electronic device shell including the metal resin composite, a personal electronic device, and a metal resin composite processing component.

### BACKGROUND

For various portable electronic communications devices such as mobile phones, notebook computers and tablet computers, a metal shell has a more beautiful appearance and better texture than a plastic shell and simultaneously has better wear resistance and compression resistance, so that the use of metal as a shell of an electronic communications device becomes a tendency in the future. However, the existing antenna technology restricts the development of this tendency. Because the metal has an electromagnetic shielding effect, many manufacturers still select a plastic shell as an electronic communications device shell, and some manufacturers adopt the technology of blocking the metal by plastic strips to prevent electromagnetic signals from being shielded.

Although the technology of blocking the metal by the plastic strips can prevent electromagnetic signals from being shielded, the plastic strips are wider and generally have a width of 1-2 mm. The appearance effects of the metal and plastic are different. From the appearance, the entire metal shell is divided into several blocks by wide plastic strips, and an appearance integration effect does not exist.

Fine slits (width is less than 1 mm) are obtained by precision processing of a metal back shell, and the slits are filled with glue to obtain an antenna structure capable of releasing electromagnetic signals. The method can obtain a better appearance integration effect but sacrifices the bonding strength (bonding strength is less than 15 MPa) of the antenna structure.

### SUMMARY

The objective of the present disclosure is to provide a preparation method. The method adopts a precision processing mode for processing slits, and the slits can improve the visual appearance effect of a metal back shell. A PMH (polymer metal hybrid) technology is adopted to sequentially perform an injection molding process twice to obtain slits with high strength (not less than 30 MPa) and a good bonding effect.

In order to realize the objective, on the one hand, the present disclosure provides a metal resin composite. The metal resin composite includes a metal substrate. The upper surface of the metal substrate is provided with at least one upper surface slit, the lower surface of the metal substrate is provided with at least one lower surface groove in a position opposite to the upper surface slit, and the upper surface slit is communicated with the lower surface groove. A first injection molding resin is formed in the upper surface slit by injection molding, and a second injection molding resin is formed in the lower surface groove by injection molding. The first injection molding resin and the second injection molding resin are selected from the same or different injection molding resins, and the second injection molding resin in the lower surface groove forms a lower surface support structure capable of supporting the first injection molding resin.

On the other hand, the present disclosure provides a method for preparing the metal resin composite, where the method includes:
S1, forming at least one upper surface slit on the upper surface of the metal substrate through processing;
S2, forming at least one exhaust hole opened in the lower surface of the metal substrate at the bottom of the upper surface slit through processing;
S3, performing first PMH injection molding in the upper surface slit to obtain the upper surface slit filled with the first injection molding resin;
S4, removing the metal substrate part in a position opposite to the upper surface slit on the lower surface of the metal substrate until reaching the bottom of the upper surface slit and exposing the first injection molding resin so as to form at least one lower surface groove through processing, where the upper surface slit is communicated with the lower surface groove; and
S5, performing second PMH injection molding in the lower surface groove to obtain the lower surface groove filled with the second injection molding resin, where the second injection molding resin in the lower surface groove forms a lower surface support structure capable of supporting the first injection molding resin, and
the first injection molding resin and the second injection molding resin are selected from the same or different injection molding resins.

Further, the present disclosure provides a metal resin composite prepared by the above method.

Further, the present disclosure also provides a personal electronic device shell, and the shell includes the above metal resin composite.

Further, the present disclosure also provides a personal electronic device, and the personal electronic device includes a personal electronic device core component and the above personal electronic device shell.

Further, the present disclosure also provides a metal resin composite processing component. The metal resin composite processing component includes a metal substrate. The upper surface of the metal substrate is provided with at least one upper surface slit, and the bottom of the upper surface slit is provided with at least one exhaust hole opened in the lower surface of the metal substrate.

Through the above technical scheme, the present disclosure adopts a precision processing mode and performs injection molding twice, that is, firstly, a region of a slit is formed on the outer surface of the substrate through processing, then, first PMH injection molding is performed, subsequently, the metal substrate below the slit is milled to reserve a vacancy, second PMH injection molding is performed to fill up the milled vacancy, exhaust holes are formed in the metal substrate through processing, and the exhaust holes are completely communicated with the slits. Such an exhaust structure is favorable for discharging gas and slag through the slits in an injection molding process of a metal shell, thereby enhancing the bonding force between metal and plastic. In addition, the metal resin composite enables an electronic product to have better aesthetic feeling integrally, simultaneously obtains a high-strength metal composite, and increases the processing yield.

Other features and advantages of this disclosure are described in detail in the Detailed Description part below.

### BRIEF DESCRIPTION OF THE DRAWINGS

The accompanying drawings are used to provide a further understanding of this disclosure, constitute a part of this specification, and are used, together with the following specific implementations, to explain this disclosure, but do not constitute limitations to this disclosure. In the accompanying drawings:
FIG. 1 is a cross-sectional view of a shell slit obtained by adopting the present disclosure; and
FIG. 2 is an optical micro-analysis diagram of a metal composite according to an embodiment, and the magnification is 200 times.

### Description of drawing marks:

1 Metal shell
2 Slit formed by first injection molding
3 Plastic support component formed by second injection molding
4 Decorative layer
21 Metal shell
22 Slit formed by first injection molding
23 Plastic support component formed by second injection molding

### DETAILED DESCRIPTION

Specific implementations of this disclosure are described in detail below with reference to the accompanying drawings. It should be understood that the specific implementations described herein are merely used to describe and explain this disclosure rather than limiting this disclosure.

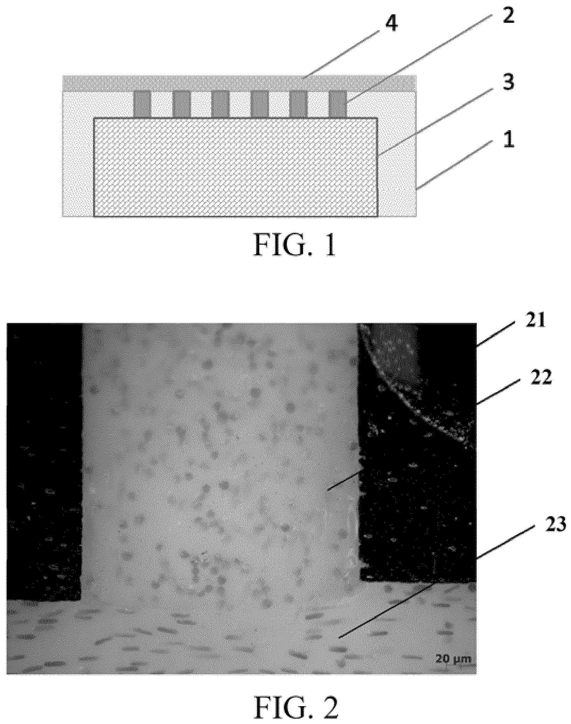

In the present disclosure, without the contrary, the used orientation words, such as up, down, left and right, generally refer to the direction of the drawing as shown in FIG. 1. The inner surface of a metal resin composite is defined as a surface, facing the inside of a communications device, of a metal shell when the metal resin composite is used in the metal shell of the communications device. It can be understood that the outer surface of the metal shell is defined as a surface, shell facing the outside, of the metal when used in the communications device.

The present disclosure provides a metal resin composite. The metal resin composite includes a metal substrate. The upper surface of the metal substrate is provided with at least one upper surface slit, the lower surface of the metal substrate is provided with at least one lower surface groove in a position opposite to the upper surface slit, and the upper surface slit is communicated with the lower surface groove. A first injection molding resin is formed in the upper surface slit by injection molding, and a second injection molding resin is formed in the lower surface groove by injection molding. The first injection molding resin and the second injection molding resin are selected from the same or different injection molding resins, and the second injection molding resin in the lower surface groove forms a lower surface support structure capable of supporting the first injection molding resin.

The opposite position of the upper surface slit refers to a position in which the upper surface slit is projected on the lower surface of the metal resin composite. When the metal resin composite is used as a shell in an electronic device, the upper surface slit is positioned in the "region of the slit", and the "region of the slit" refers to a region corresponding to an antenna of the electronic device on the shell. In addition, the size of the "region of the slit" can be properly selected by technicians in the field according to the setting scope of the antenna of the electronic device.

An interface can be observed between the first injection molding resin in the upper surface slit and the second injection molding resin in the lower surface groove. The interface between the first injection molding resin and the second injection molding resin can be observed on a section through naked eyes or a microscope. For example, as shown in FIG. 2, the interface can be formed due to different injection molding orders or different specific injection molding parameters.

The upper surface of the metal substrate can be provided with at least one upper surface slit group, the upper surface slit group can include at least two upper surface slits, and at least two upper surface slits in the upper surface slit group can be respectively communicated with the lower surface support structure.

The sizes of the upper surface slit can be sizes commonly used in the field. For example, the depth of the upper surface slit can be 0.1-3 mm and is 0.1-1.5 mm optionally; the thickness of the metal substrate can be 0.1-9 mm; the width of the upper surface slit can be 0.05-1 mm; the length of the upper surface slit can be 2-300 mm and is 60-150 mm optionally; and the distance between two adjacent upper surface parallel slits can be 0.1-30 mm and is 0.5-15 mm optionally.

The upper surface of the metal substrate can be provided with at least two upper surface slit groups. In addition, the number and shape of the slits are not particularly defined as long as communication can be realized. The upper surface slits are parallel to each other or intersect with each other, the upper surface slits are linear, wavy or jagged, and the cross sections of the upper surface slits are rectangular or trapezoidal.

The material of the metal substrate can be various conventional metal materials which can be used for an electronic device shell, such as at least one of aluminum, magnesium, iron, titanium, titanium alloy, aluminum alloy and stainless steel.

The injection molding resin has no special requirements and can be selected from, for example, one or more of polyethylene, polypropylene, polyacetal, polystyrene, modified polypheylene oxide, polyethylene terephthalate, polybutylene terephthalate, polyethylene naphthalate, polyphenyl thioether, polyimide, polyamidoimide, polyetherimide, polysulfone, polyether sulfone, polyether ketone, polyetherether magnesium, polycarbonate, polyamide and acrylonitrile-butadiene-styrene copolymer.

According to the embodiment of the present disclosure, in order to achieve an aesthetic appearance, the metal resin composite can also include a decorative layer covering the upper surface of the metal substrate and the opening of the upper surface slit.

The decorative layer can be selected from at least one of an anodic oxidation layer, a micro-arc oxidation layer, an electrophoretic layer and a spray coating. The thickness of the coating can be 5-60 µm.

According to the embodiment of the present disclosure, the injection molding resin can also contain filler, and the filler is glass fiber and/or carbon fiber. In the present embodiment, the strength of the injection molding resin can be further enhanced.

The content of the filler can be 10-50 wt% based on the total weight of the injection molding resin.

On the other hand, the present disclosure also provides a method for preparing the metal resin composite, where the method includes:
S1, forming at least one upper surface slit on the upper surface of the metal substrate through processing;
S2, forming at least one exhaust hole opened in the lower surface of the metal substrate at the bottom of the upper surface slit through processing;
S3, performing first PMH injection molding in the upper surface slit to obtain the upper surface slit filled with the first injection molding resin;
S4, removing the metal substrate part in a position opposite to the upper surface slit on the lower surface of the metal substrate until reaching the bottom of the upper surface slit and exposing the first injection molding resin so as to form at least one lower surface groove through processing, where the upper surface slit is communicated with the lower surface groove; and
S5, performing second PMH injection molding in the lower surface groove to obtain the lower surface groove filled with the second injection molding resin, where the second injection molding resin in the lower surface groove forms a lower surface support structure capable of supporting the first injection molding resin, and
the first injection molding resin and the second injection molding resin are selected from the same or different injection molding resins.

The above method adopts a precision processing mode and performs injection molding twice, that is, firstly, a region of a slit is formed on the outer surface of the substrate through processing, exhaust holes are formed in the metal substrate through processing, and the exhaust holes are completely communicated with the slits. Such an exhaust structure is favorable for discharging gas and slag through the slits in an injection molding process of a metal shell, thereby enhancing the bonding force between metal and plastic. Then, first injection molding is performed, the metal substrate below the slit is milled to reserve a vacancy, and second injection molding is performed to fill up the milled vacancy. The metal resin composite enables an electronic product to have better aesthetic feeling integrally, simultaneously obtains a high-strength metal composite, and increases the processing yield.

According to the embodiment of the present disclosure, the method also includes operation of step S6 after step S5:
S6, forming a decorative layer on the upper surface of the metal substrate and the opening of the upper surface slit.

In step S1, at least one upper surface slit group can be formed on the upper surface of the metal substrate through processing, and the upper surface slit group can include at least two upper surface slits. Furthermore, in step S4, the at least two upper surface slits in the upper surface slit group are respectively communicated with the lower surface support structure.

The thickness of the metal substrate can be 0.1-9 mm; according to the processing conditions, the depth of the upper surface slit is 0.1-3 mm, and the width of the upper surface slit can be 0.05-1 mm; the length of the upper surface slit can be 2-300 mm and is 60-150 mm optionally; and the distance between two adjacent upper surface parallel slits can be 0.1-30 mm and is 0.5-15 mm optionally.

According to the processing conditions, the upper surface of the metal substrate can be provided with at least two upper surface slit groups, the upper surface slits are parallel to each other or intersect with each other, the upper surface slits are linear, wavy or jagged, and the cross sections of the upper surface slits are rectangular or trapezoidal.

The size of the region of the slit can be properly selected by technicians in the field according to the setting scope of the antenna of the communications device.

According to the present disclosure, before first injection molding after the upper surface slit is formed through processing, a group of or multiple groups of exhaust holes are formed in the metal substrate through processing, exhaust holes are rectangular, polygonal or elliptical and can have other shapes, the distance between the exhaust holes can be identical or different, and the exhaust holes are completely communicated with the slits. Such an exhaust structure is favorable for discharging gas and slag through the slits in an injection molding process of a metal shell, thereby enhancing the bonding force between the metal substrate and plastic. In the present disclosure, the exhaust hole can be rectangular, the length of the exhaust hole can be 3-10 mm, the width of the exhaust hole can be 0.8-5 mm, and the distance between the exhaust holes can be 3-20 mm. Optionally, the length of the exhaust hole is 4-6 mm, the width of the exhaust hole is 0.8-1.5 mm, and the distance between the exhaust holes is 8-14 mm. The ratio of the total area of the bottom of the upper surface slit to the total area of the opening of the exhaust hole at the bottom of the surface slit can be 100:(0.5-10).

The material of the metal substrate is selected from at least one of aluminum, magnesium, iron, titanium, titanium alloy, aluminum alloy and stainless steel, and the injection molding resin can be selected from one or more of polyethylene, polypropylene, polyacetal, polystyrene, modified polypheylene oxide, polyethylene terephthalate, polybutylene terephthalate, polyethylene naphthalate, polyphenyl thioether, polyimide, polyamidoimide, polyetherimide, polysulfone, polyether sulfone, polyether ketone, polyetherether magnesium, polycarbonate, polyamide and acrylonitrile-butadiene-styrene copolymer.

The conditions of first injection molding and the conditions of second injection molding can independently include: the mold temperature is 50-310°C, the nozzle temperature is 200-450°C, the dwell time is 1-50 s, the ejection pressure is 50-300 MPa, the ejection time is 1-30 s, and the cooling time is 1-60 s.

According to the conditions of first injection molding and the conditions of second injection molding, the thickness of the formed resin can be 0.4-10 mm.

The operations of forming the upper surface slit through processing, forming the exhaust hole through processing and forming the lower surface groove through processing are independently completed by at least one of laser processing, electron beam processing, water cutting processing, CNC processing and etching processing.

When the above various methods are used for processing, the specific operations and conditions are commonly used in the existing technologies. For example, the laser cutting conditions are: the power is 50-200 W, the cutting speed is 10-5,000 mm/s, the laser frequency is 10-200 kHz, and the output wavelength is 250-1,064 nm. The width of the slit formed by the laser cutting method is generally 10-100 µm.

For example, the electron beam cutting method is: the cutting is performed in the environment with a vacuum degree of 10⁻3-10⁻⁴ Pa under the conditions that the current is 5-10 mA and the power density is 10⁶-10⁸ W/cm². The width of the slit formed by the electron beam cutting method is generally 30-150 µm.

For example, the CNC processing conditions are: the feeding speed is 200-600 mm/min, and the feeding amount is 10-40 µm. The width of the slit formed by the CNC processing method is generally 0.2-1 mm.

In the present disclosure, the metal substrate can be pre-treated. The pre-treatment is a pre-treatment process performed on a metal surface commonly used by technicians in the field, and generally includes the steps of performing mechanical polishing or grinding to remove obvious foreign matters on the surface and then degreasing and cleaning the processing oil adhered to the metal surface. Optionally, the pre-treatment includes the following steps: polishing the metal substrate, such as polishing the metal substrate with abrasive paper of 100-600 meshes or putting the metal substrate in a polishing machine to be polished, to enable the metal substrate to have micron-sized holes or pits; then, sequentially performing the steps of oil removing, first water washing, alkaline cleaning, second water washing, neutralizing, third water washing and the like, and cleaning the metal in ultrasonic waves by using various reagents commonly used by technicians in the field for 10 min-2 h to remove oil stains on the surface of the metal substrate; and then, putting the metal substrate in an acidic/alkaline aqueous solution (such as sodium hydroxide and sulfuric acid) to ultrasonically clean the metal surface. In the present disclosure, metal oil stains are preferentially cleaned with a detergent, then the metal is soaked into a 30-70 g/L sodium hydroxide aqueous solution with the temperature of 50-80°C to be subjected to alkaline etching for 1-10 min, then the metal is taken out and cleaned thoroughly with deionized water, and thus, the surface roughness of the metal substrate can be increased through pre-treatment. Through the above pre-treatment, at least a plurality of micro-pits is formed in the inner surface of the slit region of the metal substrate, so that the tightness of a plastic layer and the metal can be obtained by injection molding.

In the present disclosure, the first injection molding and the second injection molding can be performed through the PMH technology. The PMH technology is a polymer metal combined molding technology. Generally, the metal is taken as a substrate, a large number of nano-corrosion holes and micro-corrosion holes are formed in the metal surface, the melt of a polymer material is injected into the surface, the melt is gradually filled along a space, enters the nano-holes and the micro-holes and is gradually cooled, and the melt is completely filled under the condition of appropriate parameter selection and is combined with a matrix to form a metal composite structure. The nano-corrosion holes in the metal surface can be obtained by a chemical method or an electrochemical method, the hole size scope of the nano-holes is 10-100 nm, and the depth of the corrosion holes is 1-10 µm. In the present disclosure, preferentially, the aluminum alloy metal is taken as an anode and is put in an anodic oxidation tank which contains sulfuric acid with the concentration of 20wt%, the aluminum alloy is subjected to electrolytic corrosion for 8 min under the conditions that the voltage is 16 V and the temperature is 18°C, and the aluminum alloy is washed with water and baked for 5 min at the baking temperature of 80°C.

The injection molding direction of the first injection molding can be perpendicular to the surface of the metal substrate to inject the first injection molding resin, so that the first injection molding resin enters the upper surface slit from top to bottom.

The injection molding direction of the second injection molding can be parallel to the lower surface of the metal substrate to inject the second injection molding resin, so that the second injection molding resin enters the lower surface groove along the direction of the lower surface of the metal substrate.

In step S6, the method for forming the decorative layer can include at least one of anodic oxidation, micro-arc oxidation, electrophoresis and spraying.

The anodic oxidation conditions can be the conditions known in the field. For example, sulfuric acid of which the concentration is 150-210 g/L is taken as a bath solution, the voltage is 10-25 V, the current density is 1-2 A/dm², the temperature is 10-22°C, the anodic oxidation time is 20-60 min, the concentration of a hole sealing bath solution (such as, NiSO₄ aqueous solution) is 1-10 g/L, the hole sealing temperature is 50-95°C, and the hole sealing time is 10-50 min. The thickness of the decorative layer formed by the anodic oxidation method is generally 5-50 µm.

The micro-arc oxidation conditions can be the conditions known in the field. For example, the pH value is 6-12, the voltage is 0-800 V, the current density is 1-10 A/dm², the temperature is 15-60°C, the time is 10-60 min, the hole sealing bath solution is pure water, the hole sealing temperature is 70-90°C, and the hole sealing time is 1-10 min. The thickness of the decorative layer formed by the micro-arc oxidation method is generally 10-50 µm.

The electrophoresis conditions can be the conditions known in the field. For example, cathode electrophoresis: the voltage is 20-60 V, the pH value is 4-6, the temperature is 15-30°C, and the time is 20-60 s; anode electrophoresis: the voltage is 40-100 V, the pH value is 6-8, the temperature is 15-30°C, and the time is 40-90 s; and the baking temperature is 120-200°C, and the baking time is 30-60 min. The thickness of the decorative layer formed by the electrophoresis method is generally 5-35 µm.

The decorative layer is formed by spraying. The spraying conditions can be the conditions known in the field. For example, the static high voltage is 60-90 kV, the static current is 10-20 µA, the flow rate pressure is 0.3-0.55 Mpa, the atomizing pressure is 0.33-0.45 Mpa, the conveying speed is 4.5-5.5 m/min, the curing temperature is 150-220°C, and the curing time is 30-180 min. The thickness of the decorative layer formed by spraying is generally 10-60 µm.

According to one embodiment of the present disclosure, the injection molding resin can also contain filler, and the filler can be glass fiber and/or carbon fiber. The content of the filler can be 10-50 wt% based on the total weight of the injection molding resin. The filler can be doped into the injection molding resin by a conventional mode in the field. For example, the filler is doped into the injection molding resin by screw extrusion and then is subjected to injection molding.

Further, the present disclosure also provides a metal resin composite prepared by the method.

Further, the present disclosure also provides a personal electronic device shell, and the shell includes the above metal resin composite.

Further, the present disclosure also provides a personal electronic device, and the personal electronic device includes a personal electronic device core component and the above personal electronic device shell.

Further, the present disclosure also provides a metal resin composite processing component. The metal resin composite processing component includes a metal substrate. The upper surface of the metal substrate is provided with at least one upper surface slit, and the bottom of the upper surface slit is provided with at least one exhaust hole opened in the lower surface of the metal substrate. The metal resin composite processing component can serve as a semi-finished product in a metal resin composite processing procedure.

The present disclosure is further described in detail below through embodiments.

### Embodiment 1

### 1. Precision processing of slits

Slits are formed on the outer surface of aluminum alloy through processing by adopting precision CNC, the aluminum alloy material is 6013, and the thickness is 5.1 mm. Two groups of slits are processed, the diameter of a tool bit is 0.35 mm, the processing rotation speed is 300 r/min, and the processing running speed is 0.2 mm/min. Four slits are formed in the slit groups, the length of each slit is 80 mm, the width of each slit is 0.35 mm, the thickness of each slit is 1.1 mm, the distance between the slits is 1 mm, each slit is linear, and a shell All is obtained.

### 2. CNC processing of exhaust groove

Then, the metal substrate below each slit is milled to obtain five groups of exhaust holes, the exhaust holes are communicated with the slits, the length of each exhaust hole is 4.4 mm, the width of each exhaust hole is 1.1 mm, and the distance between the exhaust holes is 10 mm.

### 3. First PMH injection molding and fixing of slits

After the product is pre-treated, the obtained shell is subjected to first PMH injection molding by adopting PBT resin containing 40% glass fiber as a plastic support component, thereby obtaining a reinforced shell A12. The mold temperature is 140°C, the nozzle temperature is 260°C, the dwell time is 15 s, the ejection pressure is 120 MPa, the ejection time is 1 s, the cooling time is 15 s, and the thickness of the formed resin is 1.1 mm.

### 4. CNC processing and second PMH injection molding

The metal substrate below each slit is milled to reserve some vacancies, the length of each vacancy is 77 mm, and the depth of each vacancy is 4 mm. Each vacancy is subjected to second PMH injection molding by adopting PBT resin containing 40% glass fiber. The injection molding conditions are: the mold temperature is 140°C, the nozzle temperature is 260°C, the dwell time is 12 s, the ejection pressure is 115 MPa, the ejection time is 0.8 s, the cooling time is 12 s, and the thickness of the formed resin is 2.1 mm. A reinforced shell A13 subjected to second injection molding is obtained.

### 5. Surface decoration treatment

The shell A13 reinforced by an injection molding support component is subjected to alkaline etching, water washing, acid washing and water washing treatment to remove surface grease and impurities, then, the shell A13 is soaked in an electrolytic bath of an H2SO4 aqueous solution of which the sulfuric acid concentration is 180 g/L, A13 is taken as an anode, a stainless steel plate is taken as a cathode, anodic oxidation is performed for 45 min under the conditions that the voltage is 14 V, the current density is 1 A/dm² and the temperature is 11°C, the shell A13 is taken out after the anodic oxidation is completed, and the shell is subjected to ultrasonic cleaning for 10 min to avoid the influence on subsequent coloring due to acids hidden in the slits. A shell A14 after anodic oxidation is obtained.

The shell A14 is soaked in a prepared dye solution to be dyed for 10 min, the concentration of the acidic dye solution is 5 g/L, the pH value of the dye solution is 5.5, the temperature of the dye solution is adjusted to be 50°C, and then, the shell A14 is taken out and cleaned thoroughly. A dyed shell A15 is obtained.

The shell A15 is soaked in a hole sealing agent (NiSO₄ aqueous solution of which the concentration is 10 g/L) for 20 min, the temperature is 95°C, the shell is cleaned thoroughly with pure water of 90°C after hole sealing, and the shell is baked for 15 min at 60°C. A surface decoration coating of which the thickness is 20 µm is obtained.

Finally, an all-metal shell product A1 is obtained.

### Embodiment 2

### 1. Precision processing of slits

Slits are formed on aluminum alloy through processing by adopting a laser cutter (laser device LCY20 which is produced by HGTECH and has the wavelength of 1,064 nm), where the thickness of the aluminum alloy is 5.1 mm, and the type of the aluminum alloy is 6013. The width of each slit is 50 µm, the length of each slit is 80 mm, four slits are processed, and the distance between the slits is 0.8 mm. The laser processing power is 60 W, the speed is 20 mm/s, and the frequency is 1.5 kHz. A sample B11 is obtained.

### 2. CNC processing of exhaust groove

Then, the metal substrate below each slit is milled to obtain five groups of exhaust holes, the exhaust holes are communicated with the slits, the length of each exhaust hole is 4.4 mm, the width of each exhaust hole is 1.6 mm, and the distance between the exhaust holes is 10 mm.

### 3. First PMH injection molding and fixing of slits

After the product is pre-treated, the obtained shell is subjected to first PMH injection molding by adopting PBT resin containing 30% glass fiber as a plastic support component, thereby obtaining a reinforced shell B12. The mold temperature is 140°C, the nozzle temperature is 260°C, the dwell time is 18 s, the ejection pressure is 110 MPa, the ejection time is 1s, the cooling time is 15 s, and the thickness of the formed resin is 1.1 mm.

### 4. CNC processing and second PMH injection molding

The metal substrate below each slit is milled to reserve some vacancies, the length of each vacancy is 77 mm, and the depth of each vacancy is 4 mm. Each vacancy is subjected to second PMH injection molding by adopting PBT resin containing 30% glass fiber. The injection molding conditions are: the mold temperature is 140°C, the nozzle temperature is 260°C, the dwell time is 12 s, the ejection pressure is 115 MPa, the ejection time is 0.8 s, the cooling time is 12 s, and the thickness of the formed resin is 2.1 mm. A reinforced shell B13 subjected to second injection molding is obtained.

### 5. Surface decoration treatment

The shell B13 is subjected to anodic oxidation and dyeing treatment, thereby obtaining a metal shell B2.

### Contrast 1

### 1. Precision processing of slits

Slits are formed on aluminum alloy through processing by adopting precision CNC, the aluminum alloy material is 6013, and the thickness is 0.8 mm. Two groups of slits are processed, the diameter of a tool bit is 0.35 mm, the processing rotation speed is 300 r/min, and the processing running speed is 0.2 mm/min. Four slits are formed in the slit groups, the length of each slit is 80 mm, the width of each slit is 0.35 mm, the thickness of each slit is 0.8 mm, the distance between the slits is 1 mm, each slit is linear, and a shell DS11 is obtained.

### 2. First PMH injection molding

After the product is pre-treated, the obtained shell is subjected to first PMH injection molding by adopting PBT resin containing 40% glass fiber as a plastic support component, thereby obtaining a reinforced shell DS12. The injection molding conditions are: the mold temperature is 140°C, the nozzle temperature is 260°C, the dwell time is 18 s, the ejection pressure is 125 MPa, the ejection time is 0.8 s, the cooling time is 12 s, and the thickness of the formed resin is 2 mm. A metal shell DS1 is obtained.

### Contrast 2

### 1. Precision processing of slits

Slits are formed on aluminum alloy through processing by adopting precision CNC, the aluminum alloy material is 6013, and the thickness is 1.1 mm. Two groups of slits are processed, the diameter of a tool bit is 0.5 mm, the processing rotation speed is 400 r/min, and the processing running speed is 0.25 mm/min. Four slits are formed in the slit groups, the length of each slit is 80 mm, the width of each slit is 0.5 mm, the thickness of each slit is 1.1 mm, the distance between the slits is 1 mm, each slit is linear, and a shell DS21 is obtained.

### 2. First PMH injection molding

After the product is pre-treated, the obtained shell is subjected to first PMH injection molding by adopting PBT resin containing 40% glass fiber as a plastic support component, thereby obtaining a reinforced shell DS22. The mold temperature is 140°C, the nozzle temperature is 260°C, the dwell time is 15s, the ejection pressure is 110 MPa, the ejection time is 1 s, the cooling time is 15 s, and the thickness of the formed resin is 2 mm. A metal shell DS2 is obtained.

### Contrast 3

### 1. Precision processing of slits

Slits are formed on aluminum alloy through processing by adopting precision CNC, the aluminum alloy material is 6013, and the thickness is 1.1 mm. Two groups of slits are processed, the diameter of a tool bit is 0.3 mm, the processing rotation speed is 250 r/min, and the processing running speed is 0.2 mm/min. Three slits are formed in the slit groups, the length of each slit is 80 mm, the width of each slit is 0.3 mm, the thickness of each slit is 1.1 mm, the distance between the slits is 0.6 mm, each slit is linear, and a shell DS31 is obtained.

### 2. Glue filling and curing

The obtained slits are filled with liquid glue by using a glue dispenser, where the speed of the glue dispenser is 10 mm/s, the dispensing pressure is 0.6 kPa, and the diameter of a dispensing nozzle is 0.6 mm. After dispensing of the product is completed, the product stands for 10 min, the product is put into an oven to be baked for 1 h at 120°C, and then, the product is cured by glue.

### 3. CNC processing and thinning treatment of product surface

The appearance surface of the cured product is reduced by 0.2 mm by a CNC technology, thereby obtaining a metal shell DS3.

The slit widths and the metal composite molding modes of the embodiments 1 and 2 as well as the contrasts 1-3 are as shown in table 1.

**Table 1**

| Serial number | Slit width | Metal composite molding mode |
|---|---|---|
| A1 | 0.35 mm | Injection molding twice |
| B2 | 0.05 mm | Injection molding twice |
| DS1 | 0.35 mm | Injection molding once |
| DS2 | 0.5 mm | Injection molding once |
| DS3 | 0.35 mm | Glue filling and curing |

The results of the embodiments 1 and 2 as well as the contrasts 1-3 show:
The slits obtained by precision CNC processing of the A1 have no unfilled corner or blocking phenomenon and can be successfully processed once. After the first injection molding, the slits have no deformation. After the second injection molding, the slits have no plastic shortage or deformation, and the appearance and the bonding effect are good.

FIG. 1 is a cross-sectional view of the shell slit of the Al, where the upper surface of the metal shell 1 is provided with a slit 2 formed by first injection molding, the lower surface corresponding to the slit formed by first injection molding is provided with a plastic support component 3 formed by second injection molding, and a decorative layer is formed on the upper surface of the metal shell 1 and the opening of the slit 2.

FIG. 2 is an optical micro-analysis diagram of the product Al, and the magnification is 200 times. FIG. 2 shows the metal shell 21, the slit 22 formed by first injection molding and the plastic support component 23 formed by second injection molding. In FIG. 2, the glass fiber, subjected to first injection molding, of the slit is perpendicular to the plane of a picture, and the glass fiber, subjected to second injection molding, of the slit is approximately parallel to the plane of the picture. The slit region, subjected to first injection molding, of the slit in FIG. 2 and the support region, subjected to second injection molding, in FIG. 2 have a clearer interface.

The slits obtained by precision laser processing of the B2 are thorough, have no blocking phenomenon and can be successfully processed once. Slits with smaller widths can be obtained through a laser processing mode.

When the product DS1 is subjected to first injection molding, the poor phenomenon that product slits are deformed by compression occurs many times, and thus the yield is lower.

When the product DS2 is subjected to first injection molding, the phenomenon that the plastic in the inner cavity of the product has unfilled corners or incomplete filling occurs many times, the structure of the inner cavity is not full, and thus the yield is lower.

### Testing of embodiment 1:

The A1 of the embodiment 1 is subjected to a drawing force test. Specifically, aluminum metal and plastic (PBT, 40GF) PMH are subjected to spliced molding to obtain a test spline of which the bonding area is 75 mm², and a drawing force test is performed. Test results are as shown in table 2:

**Table 2**

| Product serial number | Test piece 1 | Test piece 2 | Test piece 3 |
|---|---|---|---|
| Yield strength | 3146.42 N/41.95 MPa | 3144.74 N/41.93 MPa | 3103.21 N/41.38 MPa |

The DS3 of the contrast 3 is subjected to a drawing force test. Specifically, an aluminum metal spline is bonded with glue, the bonding area is 90 mm², and a drawing force test is performed. Test results are as shown in table 3:

**Table 3**

| Product serial number | Test piece 1 | Test piece 2 | Test piece 3 |
|---|---|---|---|
| Yield strength | 983.89 N/10.93 MPa | 1069.25 N/11.88 MPa | 956.94 N/10.63 MPa |

The product DS3 is subjected to glue filling and curing and CNC thinning to obtain a structure where the inner cavity of the slit is completely filled, but the bonding strength of the metal and the glue is lower than the strength of the metal resin composite of the present disclosure.

Although example implementations of this disclosure are described in detail above with reference to the accompanying drawings, this disclosure is not limited to specific details in the foregoing implementations. Various simple variations can be made to the technical solutions of this disclosure within the scope of the technical idea of the present invention, and such simple variations all fall within the protection scope of this disclosure.

It should be further noted that the specific technical features described in the foregoing specific implementations can be combined in any appropriate manner provided that no conflict occurs. To avoid unnecessary repetition, various possible combination manners will not be described in the present invention.

In addition, various different implementations of this disclosure may alternatively be combined randomly. Such combinations should also be considered as the content disclosed in this disclosure provided that these combinations do not depart from the concept of this disclosure.

## Claims

1. A metal resin composite, comprising a metal substrate, wherein the upper surface of the metal substrate is provided with at least one upper surface slit, the lower surface of the metal substrate is provided with at least one lower surface groove in a position opposite to the upper surface slit, and the upper surface slit is communicated with the lower surface groove. A first injection molding resin is formed in the upper surface slit by injection molding, and a second injection molding resin is formed in the lower surface groove by injection molding. The first injection molding resin and the second injection molding resin are selected from the same or different injection molding resins, and the second injection molding resin in the lower surface groove forms a lower surface support structure capable of supporting the first injection molding resin.

2. The metal resin composite according to claim 1, wherein the upper surface of the metal substrate is provided with at least one upper surface slit group, the upper surface slit group comprises at least two upper surface slits, and at least two upper surface slits in the upper surface slit group are respectively communicated with the lower surface support structure.

3. The metal resin composite according to claim 1 or 2, wherein the width of the upper surface slit is 0.05 mm-1 mm.

4. The metal resin composite according to claim 3, wherein the depth of the upper surface slit is 0.1-3 mm, and the thickness of the metal substrate is 0.1-9 mm.

5. The metal resin composite according to claim 2, wherein the upper surface of the metal substrate is provided with at least two upper surface slit groups, the upper surface slits are parallel to each other or intersect with each other, the upper surface slits are linear, wavy or jagged, and the cross sections of the upper surface slits are rectangular or trapezoidal.

6. The metal resin composite according to claim 1 or 2, wherein the material of the metal substrate is selected from at least one of aluminum, magnesium, iron, titanium, titanium alloy, aluminum alloy and stainless steel, and the injection molding resin is selected from one or more of polyethylene, polypropylene, polyacetal, polystyrene, modified polypheylene oxide, polyethylene terephthalate, polybutylene terephthalate, polyethylene naphthalate, polyphenyl thioether, polyimide, polyamidoimide, polyetherimide, polysulfone, polyether sulfone, polyether ketone, polyetherether magnesium, polycarbonate, polyamide and acrylonitrile-butadiene-styrene copolymer.

7. The metal resin composite according to claim 1 or 2, wherein the metal resin composite also comprises a decorative layer covering the upper surface of the metal substrate and the opening of the upper surface slit.

8. The metal resin composite according to claim 7, wherein the decorative layer is selected from at least one of an anodic oxidation layer, a micro-arc oxidation layer, an electrophoretic layer and a spray coating.

9. The metal resin composite according to claim 1 or 2, wherein the injection molding resin also contains filler, and the filler is glass fiber and/or carbon fiber.

10. The metal resin composite according to 9, wherein the content of the filler is 10-50 wt% based on the total weight of the injection molding resin.

11. A method for preparing the metal resin composite, comprising:
S1, forming at least one upper surface slit on the upper surface of a metal substrate through processing;
S2, forming at least one exhaust hole opened in the lower surface of the metal substrate at the bottom of an upper surface slit through processing;
S3, performing first PMH injection molding in the upper surface slit to obtain the upper surface slit filled with a first injection molding resin;
S4, removing the metal substrate part in a position opposite to the upper surface slit on the lower surface of the metal substrate until reaching the bottom of the upper surface slit and exposing the first injection molding resin so as to form at least one lower surface groove through processing, wherein the upper surface slit is communicated with the lower surface groove;
S5, performing second PMH injection molding in the lower surface groove to obtain the lower surface groove filled with a second injection molding resin, wherein the second injection molding resin in the lower surface groove forms a lower surface support structure capable of supporting the first injection molding resin, and
the first injection molding resin and the second injection molding resin are selected from the same or different injection molding resins.

12. The method according to claim 11, also comprising: operation of step S6 after step S5:
S6, forming a decorative layer on the upper surface of the metal substrate and the opening of the upper surface slit.

13. The method according to claim 11, wherein in step S1, at least one upper surface slit group is formed on the upper surface of the metal substrate through processing, and the upper surface slit group comprises at least two upper surface slits. Furthermore, in step S4, the at least two upper surface slits in the upper surface slit group are respectively communicated with the lower surface support structure.

14. The method according to any one of claims 11-13, wherein the thickness of the metal substrate is 0.1-9 mm, the depth of the upper surface slit is 0.1-3 mm, and the width of the upper surface slit is 0.05-1 mm.

15. The method according to claim 14, wherein the upper surface of the metal substrate is provided with at least two upper surface slit groups, the upper surface slits are parallel to each other or intersect with each other, the upper surface slits are linear, wavy or jagged, and the cross sections of the upper surface slits are rectangular or trapezoidal.

16. The method according to any one of claims 11-13, wherein the ratio of the total area of the bottom of the upper surface slit to the total area of the opening, at the bottom of the surface slit, of the exhaust hole is 100:(0.5-10).

17. The method according to any one of claims 11-13, wherein the material of the metal substrate is selected from at least one of aluminum, magnesium, iron, titanium, titanium alloy, aluminum alloy and stainless steel, and the injection molding resin is selected from one or more of polyethylene, polypropylene, polyacetal, polystyrene, modified polypheylene oxide, polyethylene terephthalate, polybutylene terephthalate, polyethylene naphthalate, polyphenyl thioether, polyimide, polyamidoimide, polyetherimide, polysulfone, polyether sulfone, polyether ketone, polyetherether magnesium, polycarbonate, polyamide and acrylonitrile-butadiene-styrene copolymer.

18. The method according to any one of claims 11-13, wherein the conditions of first injection molding and the conditions of second injection molding independently comprise: the mold temperature is 50-310°C, the nozzle temperature is 200-450°C, the dwell time is 1-50 s, the ejection pressure is 50-300 MPa, the ejection time is 1-30 s, and the cooling time is 1-60 s.

19. The method according to any one of claims 11-13, wherein the operations of forming the upper surface slit through processing, forming the exhaust hole through processing and forming the lower surface groove through processing are independently completed by at least one of laser processing, electron beam processing, water cutting processing, CNC processing and etching processing.

20. The method according to claim 12, wherein in step S6, the method for forming the decorative layer comprises at least one of anodic oxidation, micro-arc oxidation, electrophoresis and spraying.

21. The method according to any one of claims 11-13, wherein the injection molding resin also contains filler, the filler is glass fiber and/or carbon fiber, and the content of the filler is 10-50 wt% based on the total weight of the injection molding resin.

22. A metal resin composite prepared by the method according to any one of claims 11-21.

23. A personal electronic device shell, comprising the metal resin composite according to any one of claims 1-10 and 22.

24. A personal electronic device, comprising a personal electronic device core component and the personal electronic device shell according to claim 23.

25. A metal resin composite processing component, comprising a metal substrate, wherein the upper surface of the metal substrate is provided with at least one upper surface slit, and the bottom of the upper surface slit is provided with at least one exhaust hole opened in the lower surface of the metal substrate.
